(19) Europäisches Patentamt

European Patent Office

Office européen des brevets

(11) **EP 0 809 128 B1**

(12) **EUROPEAN PATENT SPECIFICATION**

(45) Date of publication and mention
of the grant of the patent:
**29.09.2004 Bulletin 2004/40**

(51) Int Cl.$^7$: **G02F 1/015**

(21) Application number: **96303692.6**

(22) Date of filing: **23.05.1996**

(54) **Optical switch**

Optischer Schalter

Commutateur optique

(84) Designated Contracting States:
**DE FR GB NL SE**

(43) Date of publication of application:
**26.11.1997 Bulletin 1997/48**

(73) Proprietor: **HITACHI EUROPE LIMITED
Maidenhead, Berkshire, SL6 8YA (GB)**

(72) Inventors:
- **Baumberg, Jeremy John
  Cambridge, CB2 1LR (GB)**
- **Heberle, Albert P.
  Cambridge CB4 1YE (GB)**

(74) Representative: **Read, Matthew Charles et al
Venner Shipley LLP
20 Little Britain
London EC1A 7DH (GB)**

(56) References cited:
**US-A- 5 151 589**

- **PHYSICAL REVIEW LETTERS, 22 APRIL 1996, APS, USA, vol. 76, no. 17, ISSN 0031-9007, pages 3224-3227, XP000604476 WORSLEY R E ET AL: "Transient linear birefringence in GaAs quantum wells: magnetic field dependence of coherent exciton spin dynamics"**

- **APPLIED PHYSICS LETTERS, vol. 66, no. 7, 13 February 1995, pages 839-841, XP000489872 NISHIKAWA Y ET AL: "ALL-OPTICAL PICOSECOND SWITCHING OF A QUANTUM WELL ETALON USING SPIN-POLARIZATION RELAXATION"**
- **1994 IEEE NONLINEAR OPTICS: MATERIALS, FUNDAMENTALS, AND APPLICATIONS (CAT. NO.94CH3370-4), PROCEEDINGS OF 1994 NONLINEAR OPTICS: MATERIALS, FUNDAMENTALS AND APPLICATIONS, WAIKOLOA, HI, USA, 25-29 JULY 1994, ISBN 0-7803-1473-5, 1994, NEW YORK, NY, USA, IEEE, USA, pages 144-147, XP000604522 CHEMLA D S: "Dynamics of instantaneous frequency and amplitude of coherent wave mixing in quantum confined semiconductor structures"**
- **PHYSICAL REVIEW LETTERS, 25 SEPT. 1995, USA, vol. 75, no. 13, ISSN 0031-9007, pages 2598-2601, XP000605849 HEBERLE A P ET AL: "Ultrafast coherent control and destruction of excitons in quantum wells"**
- **JOURNAL OF LUMINESCENCE, JUNE 1994, NETHERLANDS, vol. 59, no. 5, ISSN 0022-2313, pages 303-313, XP000604331 DE PAULA A M ET AL: "Picosecond photoluminescence intensity correlation measurements of hot carriers in GaAs/Al/sub x/Ga/sub 1-x/As quantum wells"**

## Description

This invention relates to an optical switch operable at ultra-fast switching rates.

Recent developments in femtosecond lasers and optical signal process techniques have permitted ultra-fast optical pulses to be produced and pulse widths of less than 100 fs can now be produced on a routine basis. However, for an optical switch, difficulties arise in providing a switching medium which is operable as fast as the optical pulses available whilst requiring only a small switching energy.

In EP-A-0744648 [Art. 54(3) EPC], an optical switch is described in which first and second coherent pulses are used to switch an optical medium between different excited states so as to change its optical transmission characteristics. This concept is also described in Physical Review Letters, 25 Sept. 1995. USA, vol 75 no 13, pp 2598-2601, Herbele. A.P. et al "Ultrafast coherent control and destruction of excitons in quantum wells."

An alternative approach which makes use of the spin characteristics of photo-excited carriers is described in "All-optical picosecond switching of a quantum well etalon using spin-polarisation relaxation", Y. Nishikawa et al., Appl. Phys. Lett., 66, 839 (1995). In this technique, a circularly polarised optical pulse is directed to the switching medium, which photo-excites an electron-hole pair, with the electron and the hole having different spin states. The hole decays relatively quickly whilst the electron spin state remains for a somewhat longer period of time, in the excess of several picoseconds. The switching medium comprises a periodic structure of quantum wells. The resulting spin state is detected with a pulse of plane polarised optical probe radiation and it has been found that the plane of polarisation is rotated during the occurrence of the elevated electron spin state. The plane of polarisation of the probe pulse is thus detected in order to provide an output for the optical switch. For resetting, the spin state switch thus relies on the natural spin relaxation of the electrons in the quantum well structure, which limits the speed of switching operation that can be achieved. In order to speed up the rate, it has been proposed to provide optically inactive quantum wells adjacent to those in which the elevated charge carrier spin states are induced, in order to allow tunnelling of the carriers into the inactive wells. However, this in practice does not give a good control over the switching characteristics.

US5151589 to Takeuchi describes an optical switch for modulating one circularly polarized light beam with another. However, the speed of the switch is limited to the spin relaxation time because once the sample has been excited, the surplus spin must relax before the sample may be excited once more.

In accordance with the present invention, an optical spin switch is positively switched between two different spin states.

In accordance with the invention, there is provided an optical switch comprising an optical switching medium, a pulse source to direct a first pulse of optical radiation with a first polarisation characteristic into the switching medium so as to produce a first charge carrier spin state condition, a pulse source to thereafter direct a second pulse of optical radiation with a different polarisation characteristic into the switching medium, prior to relaxation of the first charge carrier spin state condition, so as to produce a second charge carrier spin state condition, and a probe radiation source for directing optical probe radiation into the medium for determining the spin state condition of the medium.

The first pulse may have a polarisation which rotates with time in a first direction and a second pulse may have a polarisation which rotates in a second opposite direction. The first and second pulses may be circularly polarised.

The switch may include detector means responsive to polarisation characteristics of the probe radiation after its passage into the switching medium, for detecting the spin state of the medium. The probe radiation may be pulsed and may be plane polarised so that changes in its polarisation direction are a function of the spin state of the switching medium.

Trains of the first and second pulses and the probe radiation may be directed into the medium, and the switch may be then operated so that the detector means provides an output as a function of the repetition frequencies and relative phases of the pulse trains. The switch can thus be used in a phase sensitive detector arrangement in which the output of the detector means is used to control the phase of the probe pulses relative to the phase of the first and second pulses.

A magnetic field may be applied to the switching medium to cause the charge carrier spins induced by the first pulse to precess towards alignment with the charge carrier spins induced by the second pulse. This may be used to determine the degree of correlation between the pulse trains. The magnetic field may be varied in strength with time in order to produce a peak in the output of the detector and the field strength of the peak thereby provides a measure of the pulse train correlation.

The detector means may be operative to provide an output as a function of a time delay between the first and second pulses, which may alternatively be considered as an integral of the spin state with time, occurring in the switching medium. The probe radiation used in this example may have a pulse duration significantly longer than the pulse duration for the first and second pulses. The probe radiation may comprise continuous radiation, for example from a laser source.

Such an arrangement may be used for data transmission, in which data encoding means encodes data by controlling the delay between the first and second pulses.

In order to increase contrast between the spin state conditions of the switch, the switching medium may be included in an optical resonant cavity. The switching medium may include a quantum well structure, which may include a first well for charge carriers in the first spin state condition, and a second well separated from the first well by barrier means through which charge carriers can tunnel from the first well, in order to avoid long lived charge carrier build up in the first well. The quantum well structure may include a periodic structure of layers of GaAs and AlGaAs material, although other material systems may be used as will become apparent from the detailed examples described hereinafter.

In order that the invention may be more fully understood, an embodiment thereof will now be described by way of illustrative example with reference to the accompanying drawings, in which:

Figure 1 is a schematic diagram of an optical switch in accordance with the invention ;

Figure 2 is a schematic sectional view of the optical switching medium shown in Figure 1;

Figure 3 is an energy-spin diagram for the optical transitions induced in the optical switching medium;

Figure 4 is a schematic vector diagram showing that the plane polarised probe pulse can be considered as two pulses that are circularly polarised in opposite directions;

Figure 5 illustrates the effect of the first spin state condition of the optical switching medium on the polarisation of the probe pulse;

Figure 6 is a graph of the total carrier spin as a function of time in response to different delays between the first and second control pulses;

Figure 7 illustrates an alternative form of detector;

Figure 8 illustrates a configuration in which the probe pulses transmit through the optical switching medium;

Figure 9 is a schematic diagram of the control pulse source shown in Figure 1;

Figure 10 is a schematic sectional view of an optical switching medium with an asymmetric well configuration;

Figure 11 is an energy diagram for the wells shown in Figure 10;

Figure 12 illustrates the quantum wells disposed within an optical micro-cavity;

Figure 13 is a schematic diagram of a modification to the switch in which an magnetic field is applied parallel to the quantum wells to produce a precession of the electron spins for use in cross correlation of pulse streams;

Figure 14 is a schematic vector diagram of the electron spin precession;

Figure 15a is a graph of the spin state of the optical switching medium as a function of time in response to first and second right and left circularly polarised pulses, in the presence of a weak field;

Figure 15b is a graph corresponding to Figure 15a, but in the presence of a strong field;

Figure 16 illustrates various waveforms for explaining the operation of a phase sensitive detector that uses a switch in accordance with the invention;

Figure 17 is a schematic diagram of an optical data transmission system that uses a switch in accordance with the invention; and

Figure 18 illustrates the optical pulse configuration used for encoding the data transmitted in the apparatus of Figure 17.

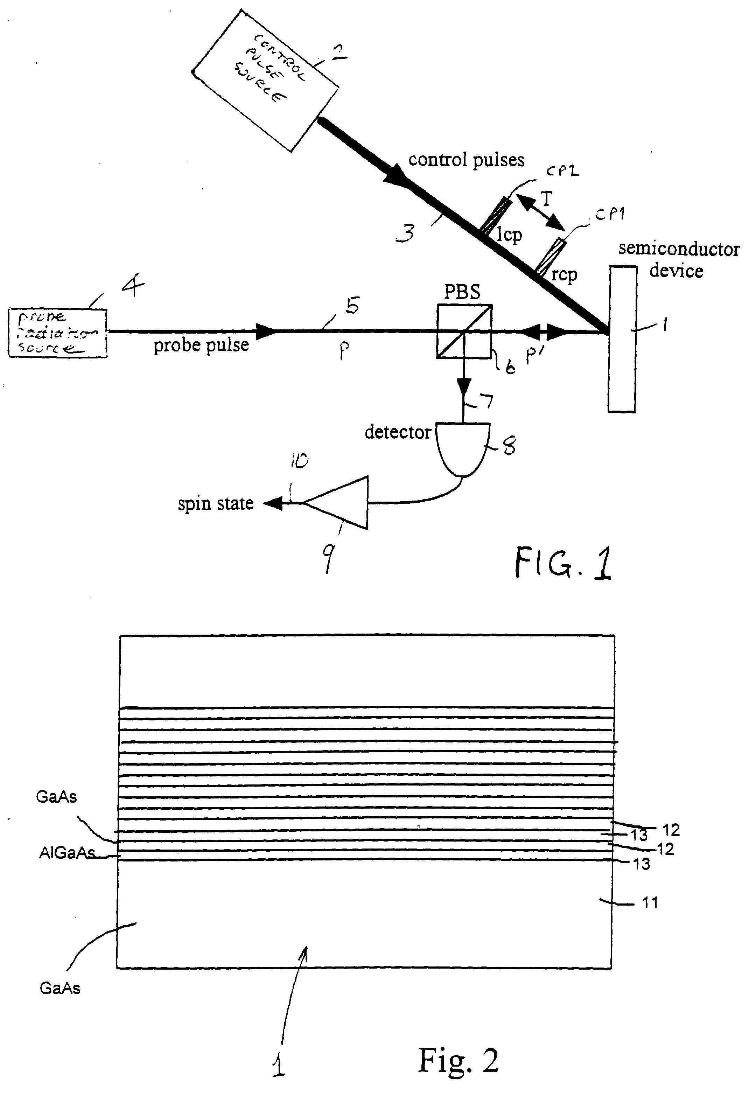

Referring to Figure 1, the switching device consists of an optical switching medium 1 in the form of a semiconductor quantum well structure, to which control pulses from a control pulse source 2 are directed on path 3. The control pulses switch the spin state of charge carriers in the optical switching medium 1, and the resulting spin state of the medium is detected by means of a probe pulse P from a probe radiation source 4 directed into the medium 1 along path 5. The probe pulses from source 4, are plane polarised and pass through a polarisation beam splitter 6 as a they pass to the optical switching medium 1. As will be explained hereinafter in more detail, the plane of polarisation of the probe pulse is rotated depending on the spin state of the optical switching medium, so that probe pulses reflected from the medium 1 are reflected by the beam splitter with an amplitude dependent upon the amount of rotation of the plane of polarisation, along path 7 to a detector 8 which produces an electrical signal of an amplitude dependent on the degree of rotation of the plane of polarisation of the probe pulse by the semiconductor medium. The output of the detector 8 is fed to an electric amplifier 9 to provide an output signal on line 10.

The control pulse source 2 produces first and second optical pulses CP1, CP2 separated in time by a delay T. The control pulses CP1, CP2 are circularly polarised in opposite directions. In this example, pulse CP1 is right-hand circular polarised (rcp) whereas the second control pulse CP2 is left-hand circular polarised (lcp). The first control pulse CP1 switches the optical switching medium to a first spin state and the second pulse CP2 subsequently switches the medium 1 to a second, different spin state as will be explained in more detail hereinafter.

The optical switching medium 1 comprises in this example a multiple layer quantum well structure shown in more detail in Figure 2, which comprises a substrate of GaAs material 11 on which layers of AlGaAs and GaAs are formed by molecular beam epitaxy (MBE) or other suitable techniques, to form a periodic well structure. In this example five GaAs quantum wells were grown from layers 12, 13 of GaAs and AlGaAs material. In this example, the GaAs quantum wells have a thickness of 25 nm.

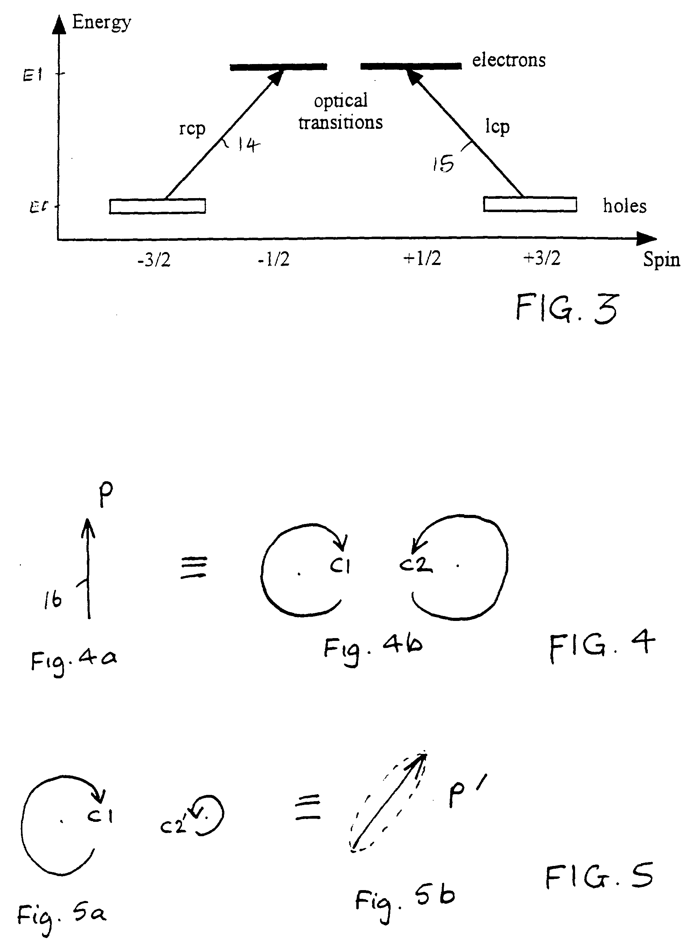

The effect of the control pulses CP1, CP2 on the optical medium can be seen from the spin-energy diagram of Figure 3. The right-hand circularly polarised pulse CP1 produces an exciton in which an electron is raised to an energy level E1 in the conductance band, leaving a hole in the valance band, as shown by arrow 14. The electron in energy state E1 has a spin of -1/2 and the corresponding hole has a spin of -3/2. The hole spin scatters to the + 3/2 state relatively quickly but the electron in spin state -1/2 has a spin lifetime of the order of several picoseconds. Thus, in response to the first control pulse CP1, the optical medium 1 is raised to a first spin state with electrons at energy E1, with a spin -1/2. In accordance with the invention, it has been appreciated that the medium can be switched to a second spin state by means of the second control pulse CP2 of opposite circular polarisation to the first pulse. In Figure 3, the pulse CP2 produces transition 15 in which an electron is raised to energy E1 with a spin + 1/2 with a hole of spin + 3/2 being formed in the valance band. The time delay T between the first and second pulses CP1, CP2 is less than the relaxation time $\tau$ of the electrons at energy E1, so that the combined effect of the electrons with spin -1/2 and + 1/2, produced by the pulses CP1 and CP2, is an overall spin state of 0. Thus, the optical switching medium is initially switched by pulse CP1 to a first spin state of + 1/2 and thereafter, in a time less than the relaxation time $\tau$ of the energy state, is switched by pulse CP2 to a second condition of zero net spin.

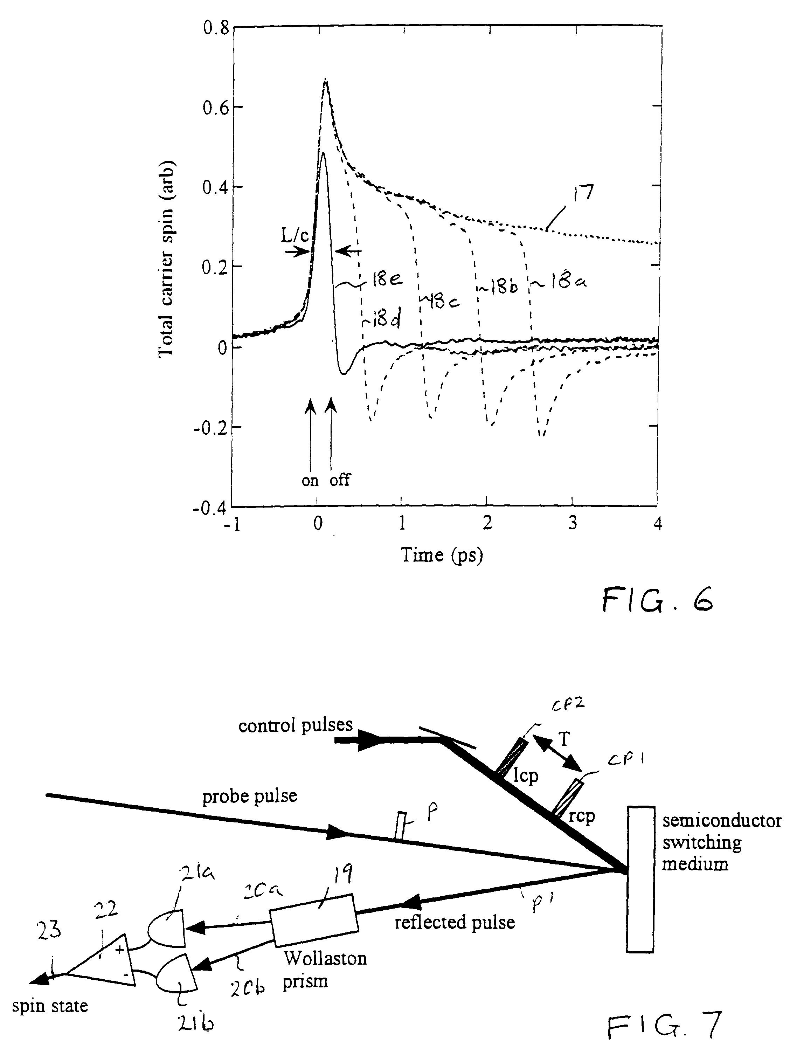

The spin state of the optical switching medium controls the polarisation of the probe pulse from the source 4 (Figure 1). Referring to Figure 4, the probe pulse P is plane polarised as shown at 16 and it can be considered that the plane polarisation is made up of two circular polarisations of opposite hand as illustrated by vectors C1 and C2. These circular polarisations couple with the spin states shown in Figure 3. The transition 14 between spin + 3/2 holes and spin + 1/2 electrons induces an optical non-linearity predominantly for left circularly polarised light. Similarly, the transition 15 of Figure 3 causes a non-linearity predominantly for right circularly polarised light. Thus, when the optical switching medium is in the first spin state condition in response to the pulse CP1, the circular component C2 of probe pulse P is absorbed in the medium so as to produce the condition shown in Figure 5, in which the amplitude of the circular polarisation component C2 has been reduced to C2'. The vector sum P' of the two circular polarisations C1 and C2' is shown in Figure 5b. Thus, if the probe pulse is directed into the switching medium between the occurrence first and second pulses CP1 and CP2, its polarisation vector will be swung through an angle from the condition shown in Figure 4a, to that shown in Figure 5b.

The pulse P' is reflected back to the polarisation beam splitter 6 and the orthogonal component that is produced by the rotation of polarisation, is directed on path 7 to the detector 8. Thus, the amplitude of the electrical signal produced by detector 8 is a function of the angle of rotation of the polarisation vector, and thus is a function of the spin state of the optical medium.

When the probe pulse P is directed in to the medium 1 after the occurrence of the second control pulse CP2, there is no rotation of the plane of polarisation of the probe pulse, due to the fact that in the second spin state condition, the electron spins for the two transitions 14 and 15 cancel out. Thus, the polarisation vector P' of the reflected probe pulse remains aligned with vector P of the incident probe pulse. Consequently, the polarisation beam splitter 6 does not reflect an significant amount of light on path 7 so that the detector 8 provides a zero output. Figure 6 is a graph of the spin measured by the probe pulse as a function of time for different values of delay T between the first and second control pulses CP1, CP2. The effect of a single control pulse CP1 (without CP2) is shown as trace 17. It will be seen that at time t = 0 the spin state of the optical medium is switched to a relatively high level from which it decays relatively slowly over more than 4 picoseconds. Trace 18a shows the effect of the second control pulse CP2, applied with a delay T ~2.2 ps. The traces 18b-18d illustrate the effect of progressively shorter delay times T. The shortest switching time is shown as a solid trace 18e, in which the medium was switched from the first spin condition to a second (substantially zero) spin condition in a time of the order to 200 fs. This switching was performed with a sample composed of five, 25 nm GaAs quantum wells at a temperature of 4K. The wavelength of the control pulses was 810 nm and the wavelength of the probe pulse was also 810 nm. The duration of the probe pulse was 80 fs and it was scanned in time to trace out the evolving spin state of the device. Whilst GaAs material systems were used in the described example, the scheme will work for any semiconductor with spin selection rules around the bandgap energy that allow preferential spin excitation, notably the zinc blend semiconductor crystal structures. In particular, this includes AlGaAs, InGaAsP, GaN, GaP, InSb and similar III-V and II-VI alloys. Heterostructures, whilst not essential, are preferred in order to optimise device performance in terms of contrast ratio and spin scattering times. The switching energy of the described example of the invention was found to be 5 nJ cm$^{-2}$, which is extremely low in comparison to the previously described prior art devices.

An alternative configuration for detecting the spin state of the optical medium is shown in Figure 7. Instead of using a polarisation beam splitter, a Wollaston prism is used to split the probe pulse polarisation into two orthogonal components. The configuration is initially set up so that the Wollaston prism produces substantially equal amplitude outputs 20a, 20b, in response to the two orthogonal polarisation directions. The equal amplitude components are detected are by detectors 21a, 21b which provide electrical inputs to a comparator 22. When the reflected pulse P' maintains the polarisation direction of input pulse P, the outputs of detectors 21a, 21b are balanced so that no output occurs on line 23 from the comparator 22. However, when the spin state of the optical medium 1 rotates the pulse vector P', the outputs of detectors 21a, 21b become unbalanced so that a signal is produced on line 23.

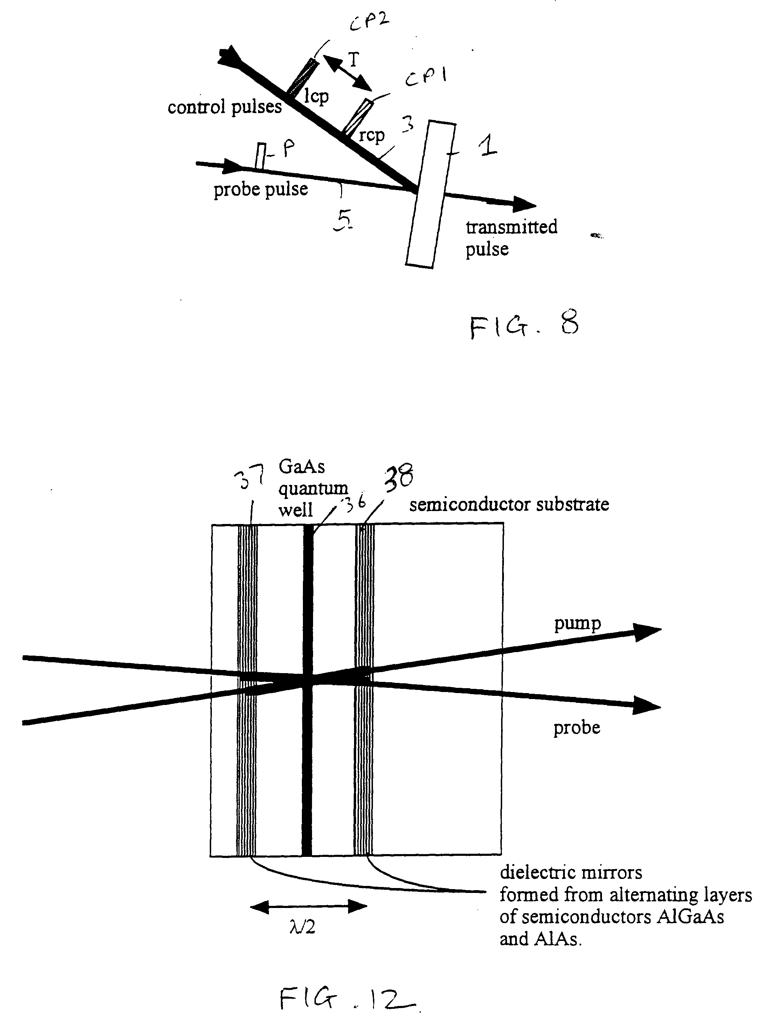

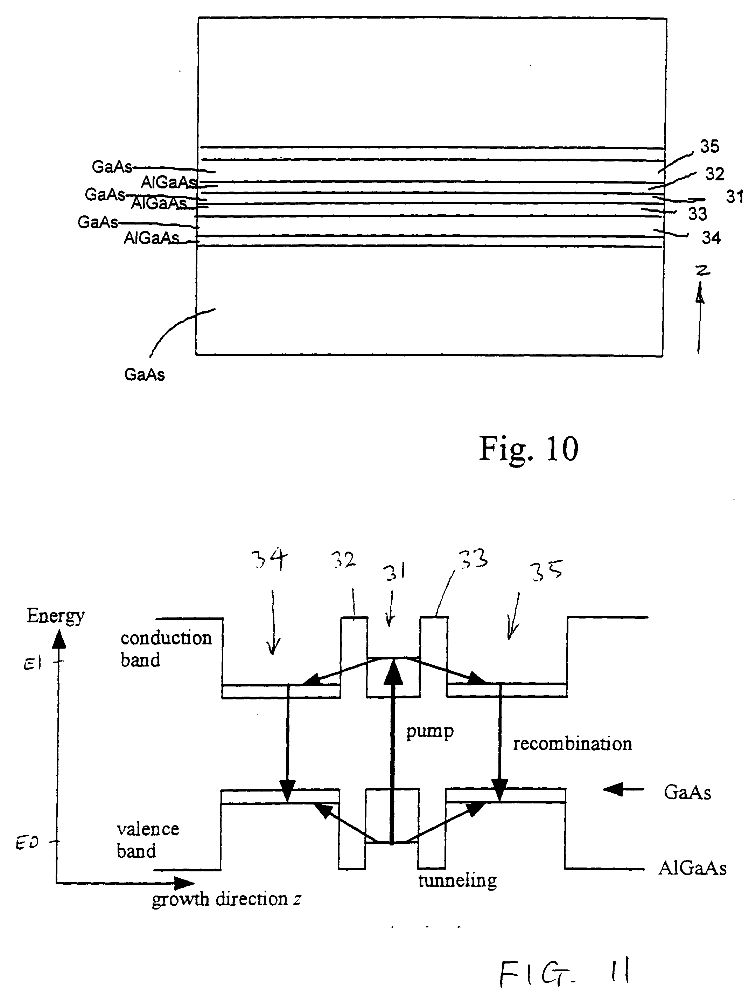

In the example shown in Figures 1 and 7, the probe pulse P is reflected from the optical medium 1. However, as shown in Figure 8, the probe pulse may be transmitted through the medium so that if desired, the probe pulse can interrogate more than one optical medium prior to detection.

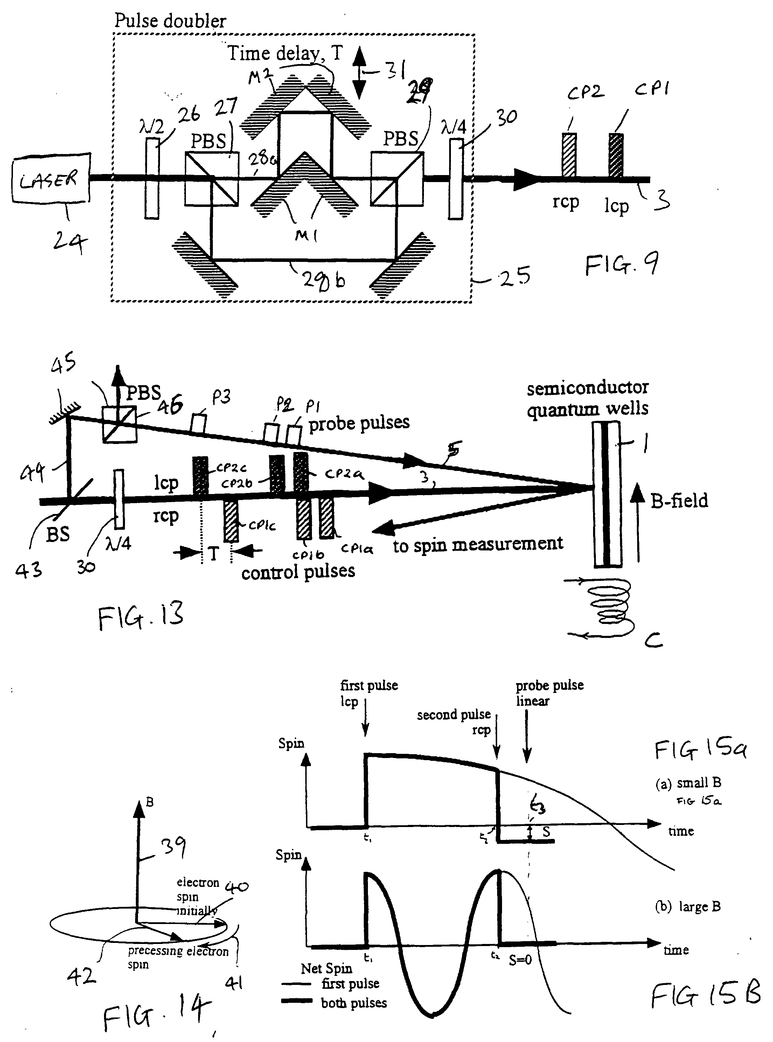

Figure 9 illustrates an example of apparatus for producing the first and second control pulses CP1, CP2 of opposite circular polarisations, from a single input optical pulse. A femtosecond laser 24 such as a mode locked diode laser or a mode-locked solid state laser such as a Ti-doped sapphire, or other, produces a plane polarised pulse at a wavelength appropriate for the bandgap of the semiconductor used in the device with a duration of typically 100 fs - 1ps which is fed to a pulse doubler 25. The pulse from the laser 24 passes through a $\lambda/2$ plate 26 to a polarisation beam splitter 27 that produces first and second split pulses that pass along paths 28a, 28b respectively. The split pulses are plane polarised at 90° to one another. The effect of the $\lambda/2$ plate 26 is to rotate the plane of polarisation of the input pulse through 45° to ensure that the two split pulses are of substantially equal amplitude. The paths 28a, 28b extend to a second beam splitter 29 which acts to direct the split pulses onto a common optical output path 3 through a quarter wave plate 30. The path 28a is longer than the path 28b and includes a movable mirror arrangement M1, M2 movable in the direction of arrow 31 in order to adjust the time delay T between the split pulses. It will be understood that the time delay T corresponds to L/c where L is the difference in path length and c is the velocity of light. The first split pulse, travelling on path 28b, reaches the quarter wave plate 30 and is left circularly polarised thereby to form the pulse CP1. The second split pulse arrives via path 28a with a time delay T selected by adjustment of the path length L. Due to the fact that there is a 90° difference between the polarisation directions of the first and second split pulses, the quarter wave plate 30 produces right circular polarisation of the second split pulse so as to form the second control pulse CP2. Whilst the arrangement shown in Figure 9 comprises a number of discrete components, it will be appreciated that the arrangement could be integrated into a semiconductor chip. The time delay in this integrated arrangement may be fixed or alternatively may be tunable by electrically altering the refractive index of the path 28a and/or 28b.

In order that the device may operate at high pulse repetition rates, it is desirable to provide a mechanism for avoiding large scale build-up of charge carriers in the optical switching medium,which would otherwise fill up the electron hole states at the band edge and degrade the observed spin switching. Figure 10 illustrates an example of the optical switching medium configured for this purpose. The structure is similar to that shown in Figure 2 but the wells are of different widths. A first relatively narrow well comprises a GaAs layer 31 disposed between the AlGaAs layers 32, 33 which act as tunnelling barriers into second and third wells of GaAs material 34, 35. The second and third wells 34, 35 are wider than the first well 31. The previously described spin transitions occur in the well 31 and the resulting charge carriers can be tunnel into the de-tuned, wider wells 34, 35 to avoid a carrier build-up in the well 31. Figure 11 illustrates the various energy levels and tunnelling paths associated with the structure of Figure 10. The incident pulses CP1, CP2 produce charge carrier transitions between energy level E0 and E1, with associated spins as previously described with reference to Figure 3. This occurs in well 31. The wavelength of the pulses CP1, CP2 is tuned to the width of the well 31. The charge carriers that accumulate in the well 31, at level E0 and E1 can tunnel through the barriers 32, 33 into the wells 34, 35, prior to expiry of their relaxation time, and recombination can occur in the wells 34, 35. In this way, the carrier density in the well 31 is reduced, thereby improving the contrast ratio of the detected spin switching with the probe pulse P, which is tuned to detect transitions in the well 31 only. This configuration allows the switching device to operate reliably with pulse repetition rates in excess of 1THz.

An amplification of the spin switching amplitude can be achieved if the control and probe pulses pass several times through the optical switching medium. Referring to Figure 12, the quantum well structure, shown generally at 36 is sandwiched between dielectric mirrors 37, 38 formed of alternating layers of semiconductor material. In this example, the alternating layers are formed of AlGaAs and AlAs material and are spaced apart by an effective wavelength of $\lambda/2$ in respect of the control pulse and probe radiation. Reference is directed to "Observation of Coupled Exciton-Photon Mode Splitting in a Semiconductor Quantum Microcavity", C.Weisbuch et al., Phys. Rev. Lett. 69, 3314 (1992). Using such an optical cavity, a compromise needs to be reached between the delay introduced by the finesse of the cavity, which degrades the switching speed, versus the improvement in switching amplitude. It has been found that using an optical cavity with a finesse $F \sim 10$, amplification factors of F are possible without significantly degrading the switching speed.

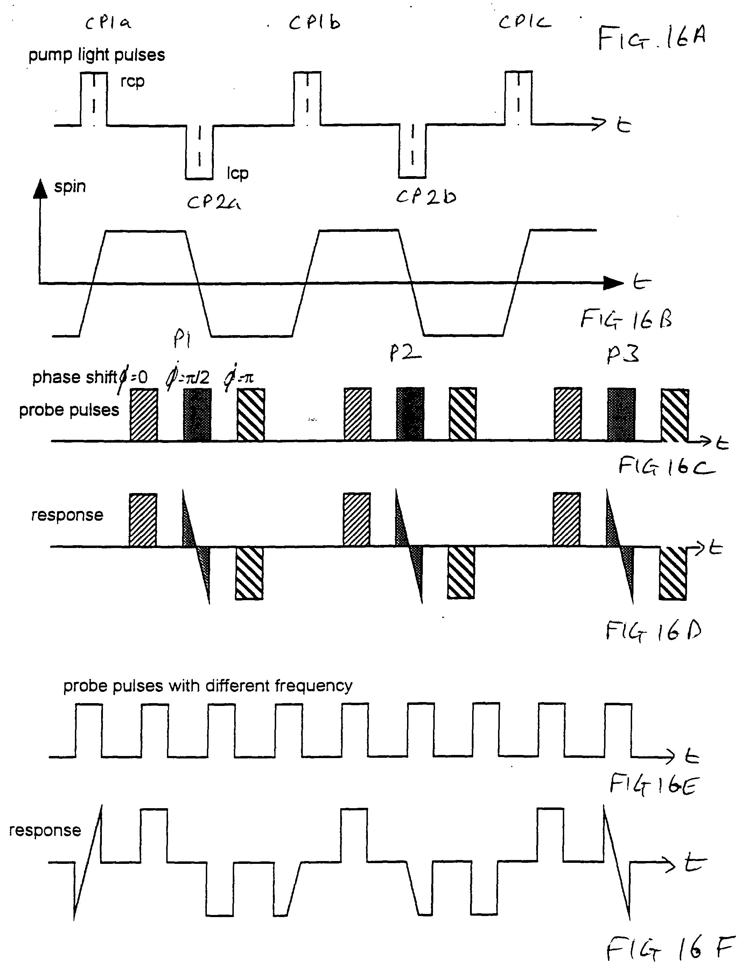

An additional coupling can be induced by applying a magnetic field with an axial direction parallel to the plane of the quantum wells. The magnetic field causes the electron spins to precess around the magnetic field axis at a rate given by the Larmor frequency

$$\Omega_L = g_e \cdot \mu_B \cdot B/h$$

which is proportional to the field strength. Reference is directed to "Quantum beats of electron Larmor Precession in GaAs Wells", A. P. Heberle, W. W. Rühle and K. Ploog, Phys. Rev. Lett., 72 3887 (1994). This means that a stream of pulses of one circular polarisation can couple in a time-delayed manner into a stream of pulses of the opposite circular polarisation. Thus, referring to Figure 13, a stream of pulses CP1a, CP1b, CP1c that are right circularly polarised together with a stream of left circularly polarised pulses CP2a, CP2b, CP2c are directed to the optical switching medium 1, which is subjected to a magnetic field B shown by arrow 39 produced by a coil C, or other means. Referring to Figure 14, the charge carrier spin induced by pulse CP1a is initially in the direction shown by arrow 41. However with time, the spin direction precesses in the direction of arrow 41 around the axis 39 of the field B, to the position 42. Thus, the pulse CP2a, which induces charge carriers of an opposite spin direction, in combination with the precessed spin from pulse CP1a, results in a net residual spin. A similar effect is produced by the pulse pairs CP1b, CP2b and CP1c, CP2c. The probe pulses (P1, P2...) used for detection are derived from the train of second pulses (CP2a, CP2b...) by means of a beam splitter 43, fractionally delayed over a path 44 that includes a mirror 45, selected by means of a polarisation beam splitter 46, and directed into the sample on path 5. The probe pulses then integrate the total spin remaining in the optical switching medium after the application of a pair of rcp and lcp pulses such as CP1 and CP2. In the absence of a magnetic field, the net spin is zero.

Under a magnetic field as shown in Figure 15, the spin becomes non-zero. Referring to Figure 15a, under conditions of a small applied field, a first pulse CP1 applied to the optical switching medium, produces a first overall spin state at time t1. The spin then precesses, but only by a small amount due to the weak field. At time t2 a second, opposite circularly polarised pulse CP2 is applied, which reduces the overall spin state only incompletely. The probe pulse P1 arrives at time t3, shortly after the pulse CP2, and sees a net spin S. In Figure 15b, the corresponding result when a high field is applied, is shown.

The high field produces a rapid precession of the spin induced by the first pulse CP1 at time t1 so that, at time t2, it has returned to its original spin direction and is cancelled out by the spin produced by the second pulse CP2. Thus, at time t3, the pulse P of probe radiation see zero net spin. It will thus be understood that the field strength can be swept with time so that when a zero occurs in the detector's output, the field strength provides a measure of the correlation time between the pulses.

This optical correlation can be used for phase sensitive detection relative to the spin precession phase. The net spin induced by an input signal I(t) (where positive and negative amplitudes of I(t) correspond to left and right circular polarised light respectively) is

$$\Delta S(t) = \int_0^\infty dt' [I(t-t') \cos (\bar\omega \, t') \, e^{-t'/\tau}]$$

where $\tau$ is the spin relaxation time. The spin precession therefore acts as a phase sensitive detector with integration time $\tau$. An advantageous feature of the detector is the absence of response to higher even harmonics of $\bar\omega$. This phase sensitive detector can also be used in phase locked loop arrangements for synchronisation of optical signals.

Referring to Figure 16, an alternative phase sensitive detector will now be described, which works without a magnetic field. Referring to Figure 16a, regular trains of first and second control pulses of opposite circular polarisations, CP1a, CP1b etc; CP2a, CP2b etc, are applied to the optical switching medium in such a manner that the resultant spin state is periodically switched between a relatively high and low level, as shown in Figure 16b. In Figure 16c, a train of probe pulses P1, P2, P3 is shown at three different phases $\phi$ relative to the spin waveform shown in Figure 16b. Relative phases of $\phi = 0$, $\phi = \pi /2$ and $\phi = \pi$ are shown. The corresponding response from the detector e.g. detector 8 (of Figure 1) is shown in Figure 16d. It will be seen that for a phase difference $\phi = 0$, the probe pulses will detect a net positive spin so that the detector will provide a positive output. For $\phi = \pi/2$ , the detector output will be partly positive and partly negative, giving an effectively 0 output, where as for $\phi = \pi$ a net negative spin will be detected, providing a negative output. It will thus be seen the output of the detector comprises a voltage level which can be used for phase sensitive detection. Thus, the output of the detector can be used to alter the phase of the probe pulses in order to keep them in synchronism with the control pulses CP1, CP2.

Figure 16e illustrates a train of probe pulses of a different frequency from the control pulses CP1, CP2. The corresponding response is shown in Figure 16f. The average response is 0 when the probe pulses have no frequency component which is a multiple of the frequency of the control pulses CP1, CP2. Thus, the output of the detector can be used to lock on to the frequency of the control pulses and then to maintain the probe pulses in phase with the control pulses.

A further use of this invention is as a time to voltage converter. If longer probe pulses are used, (including in the limiting case, a continuous wave probe laser beam) then the integrated total spin density is measured. The ultrafast initial transient from biexcitonic contributions (see Heberle *et al supra*) for both pulses and cancels out. The net spin $\Delta S$, then measured by the probe radiation is given by

$$\Delta S = NA \int_0^\infty dt [e^{-t/\tau} - e^{-(t-T)/\tau}]$$

$$= NA\tau(1 - e^{-T/\tau})$$

$$\approx NAT - \frac{NAT^2}{2T} \quad for T < \tau$$

where $T = L/c$ is the time between two control pulses to be measured, $\tau$ is the spin relaxation time (which needs to be substantially greater than the time to be measured to keep within the linear approximation), N is the number of pulses per second, and A is the calibration spin amplitude per pulse. This probe signal detected (electronically or optically) can then be used as a measure of the interpulse delay time.

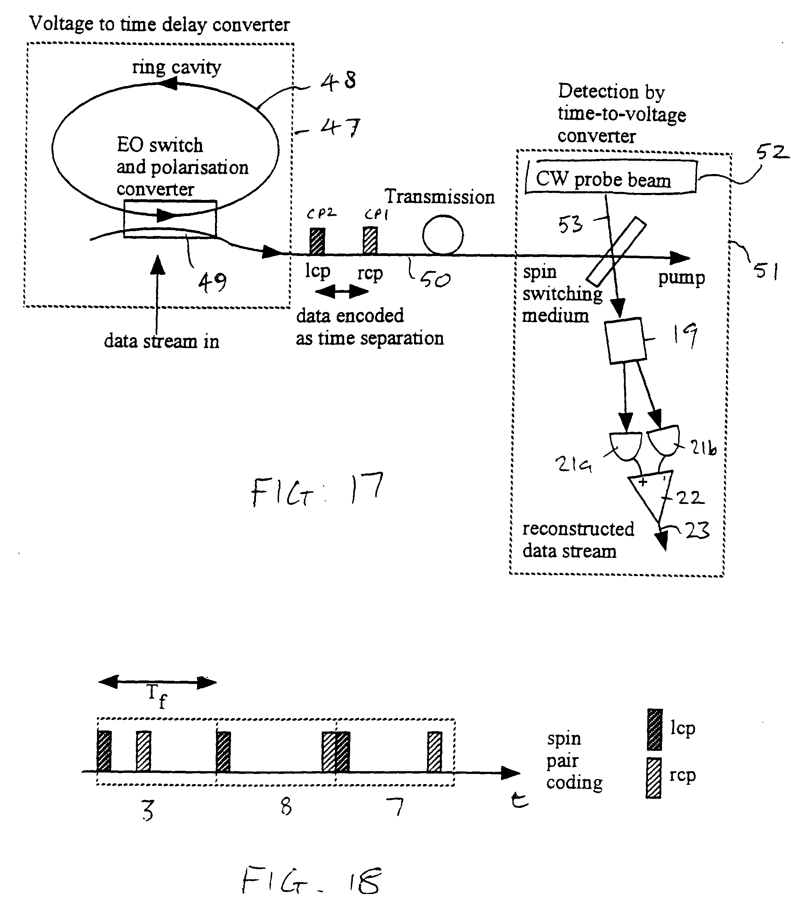

This principle can be used to encode data as delay times between two pulses. Referring to Figure 17, a mode locked ring laser 47 shown schematically includes an optical resonant ring 48 and an electro-optical switch and polarisation converter 49 responsive to input electrical data in order to produce successive right-hand and left-hand circularly polarised pulses CP1, CP2 for transmission over an optical path 50, such as an optical fibre, to a remote detector 51, that includes the optical switching medium 1 and a laser 52 which produces a continuous (cw) beam of probe radiation 53. The probe radiation is directed to a Wollaston prism 19 with associated detectors 21a, 21b and an amplifier 22, in the manner described with reference to Figure 7. The data coding is shown in Figure 18. Successive numerical values are transmitted in successive time frames $T_f$. Each time frame includes a pair of the pulses CP1, CP2 of opposite circular polarisation. The delay between the pulses is indicative of the numerical value of the data for the time frame. At the detector 47, for each time frame $T_f$, the spin state of the switching medium 1 is firstly switched to a first spin state by the first pulse CP1 and thereafter switched to the second spin state by pulse CP2. The delay between the pulses is a function of the numerical value of the data. The plane of polarisation of the probe radiation is thus switched between two different values by the successive pulses CP1, CP2 so as to provide electrical output pulses on line 23 that have a width dependent on the value of the data transmitted for each time frame. The transmission scheme has the advantage that the average optical power transmitted is constant as compared with conventional data streams which vary the number of optical pulses transmitted. Thus, unlike conventional systems, any heating effect on the optical system is kept to a low level and in any event is constant, thereby avoiding non-linearities that can be produced as a result of heating by the optical pulses. In order to transmit data over long optical fibres, it may be convenient to transmit the pulses for each time frame $T_f$ in orthogonal linear polarisations along a polarisation preserving fibre and then to convert the pulses into circular polarisations at the fibre end.

The switching device according to the invention described with reference to Figure 1 has an excellent on-off contrast ratio because the intensity of light transmitted in the off state is only limited by the polarisation ratio of the polarising beam splitter 6, which can be $10^{-6}$.

Many modifications and variations fall within the scope of the claimed invention. For example, instead of using first and second pulses of opposite circular polarisation, linearly polarised orthogonal control pulses can be used, together with a probe pulse at 45° relative thereto, in order to detect induced linear birefringence arising from a coherent superposition of the spin states. Reference is directed to "Transient Linear Birefringence in GaAs Quantum Wells: Magnetic Field Dependence of Coherent Exciton Spin Dynamics" R. E. Worsley et al., Phys. Rev. Lett. 76, 3224 (1996).

It will thus be understood from the foregoing that switches in accordance with the invention may be used in optical fibre communication systems with appropriate engineered InGaAsP devices in the 1.3 μm and 1.5μm wavelength bands. The switch may also be used in optical interconnects between electronic devices and in optical computing.

**Claims**

1.  An optical switch comprising:

    an optical switching medium (1);
    a pulse source (2) to direct a first pulse (CP1) of optical radiation with a first polarisation characteristic to the switching medium so as to produce a first charge carrier spin state condition;
    a pulse source (2) to thereafter direct a second pulse (CP2) of optical radiation with a different polarisation characteristic, to the switching medium, prior to relaxation of the first charge carrier spin state condition, so as to produce a second charge carrier spin state condition; and
    a probe radiation source (4) for directing optical probe radiation into the medium for determining the spin state condition of the medium.

2.  A switch according to claim 1 wherein the first pulse (CP1) has a polarisation which rotates with time in a first direction, and the second pulse (CP2) has a polarisation which rotates with time in a second opposite direction.

3.  A switch according to claim 2 wherein the first and second pulses are circularly polarised in opposite directions.

4. A switch according to any preceding claim including detector means (6, 7, 8; 19, 20, 22) responsive to a polarisation characteristic of the probe radiation after its passage into the switching medium for detecting the spin state of the medium.

5. A switch according to claim 4 wherein the probe radiation (P1) is pulsed.

6. A switch according to claim 4 or 5 wherein the probe radiation (P1) is plane polarised and changes its polarisation direction as a function of the spin state of the switching medium.

7. A switch according to any preceding claim including means for applying a magnetic field (B) to the switching medium to cause charge carrier spins induced by the first pulse to precess towards alignment with charge carrier spins induced by the second pulse.

8. A switch according to claim 7 including means for directing trains of said first and second pulses (CP1a, b, c, CP2a, b, c) into the medium, and means for changing the strength of the applied magnetic field for determining correlation between the pulse trains.

9. A switch according to claim 4 including means for directing trains of said first and second pulses and pulses of the probe radiation (CP1a, b; CP2a, b; P1, P2) into the medium, the switch being operative such that the detector means provides an output as a function of the relative phases of the pulse trains.

10. A switch according to claim 9 including means responsive to the output of the detector means for controlling the phase of the probe pulses relative to the phase of the first and second pulses.

11. A switch according to claim 4 wherein the detector means is operative to provide an output (23) as a function of a time delay between the first and second ones of the pulses.

12. A switch according to claim 11 including data encoding means (44) for encoding data by controlling the delay between the first and second pulses.

13. A switch according to any preceding claim wherein the switching medium is included in an optical cavity (37, 38).

14. A switch according to any preceding claim wherein the switching medium includes a quantum well structure (12, 13).

15. A switch according to claim 14 wherein the quantum well structure includes a first well (31) for charge carriers in the first spin state, and a second well (34, 35) separated from the first well by barrier means through which charge carriers can tunnel from the first well.

16. A switch according to claim 15 wherein the first and second pulses each stimulate electron-hole pairs with different spins.

17. A switch according to any one of claims 14 to 16 wherein the quantum well structure includes a periodic structure of layers (11, 12) of GaAs and Al-GaAs material.

18. A switch according to any preceding claim wherein the means for producing the first and second pulses comprise beam splitting means (27) for forming from a plane polarised incoming pulse, first and second split pulses which have substantially orthogonal polarisation directions, delay means (M1, M2) for delaying one of the split pulses relative to the other, beam combining means (28) for directing the split pulses to a common optical output path, and circular polarising means for circularly polarising the split pulses in opposite rotational directions.

19. A switch according to claim 18 wherein the circular polarising means (30) comprises a quarter wave plate in the common output path.

20. A method of switching an optical switching medium, comprising directing a first pulse of optical radiation with a first polarisation characteristic to the switching medium so as to produce a first charge carrier spin state condition, directing a second pulse of optical radiation with a different polarisation characteristic to the switching medium, prior to relaxation of the first charge carrier spin state condition, so as to produce a second charge carrier spin state condition, directing optical probe radiation with a predetermined polarisation condition into the medium and determining the spin state condition of the medium by monitoring the polarisation condition of the probe radiation.

**Patentansprüche**

1. Optischer Schalter, umfassend:

    ein optisches Schaltmedium (1);
    eine Pulsquelle (2), um einen ersten Puls (CP1) von optischer Strahlung mit einer ersten Polarisationscharakteristik auf das Schaltmedium zu richten, um eine erste Ladungsträger-Spinzustandsbedingung zu erzeugen;

eine Pulsquelle (2), um danach einen zweiten Puls (CP2) von optischer Strahlung mit einer unterschiedlichen Polarisationscharakteristik vor einer Relaxation der ersten Ladungsträger-Spinzustandsbedingung auf das Schaltmedium zu richten, um eine zweite Ladungsträger-Spinzustandsbedingung zu erzeugen; und

eine Prüfstrahlungsquelle (4), um optische Prüfstrahlung in das Medium zu richten, um die Spinzustandsbedingung des Mediums zu bestimmen.

2. Schalter nach Anspruch 1, wobei der erste Puls (CP1) eine Polarisation hat, die zeitlich in einer ersten Richtung rotiert, und der zweite Puls (CP2) eine Polarisation hat, die zeitlich in einer zweiten entgegengesetzten Richtung rotiert.

3. Schalter nach Anspruch 2, wobei der erste und der zweite Puls in entgegengesetzten Richtungen zirkular polarisiert sind.

4. Schalter nach einem der vorhergehenden Ansprüche, umfassend eine Detektoreinrichtung (6, 7, 8; 19, 20, 22), die auf eine Polarisationscharakteristik der Prüfstrahlung nach ihrem Durchgang in das Schaltmedium anspricht, um den Spinzustand des Mediums zu erfassen.

5. Schalter nach Anspruch 4, wobei die Prüfstrahlung (P1) gepulst ist.

6. Schalter nach Anspruch 4 oder 5, wobei die Prüfstrahlung (P1) linear polarisiert ist und ihre Polarisationsrichtung als Funktion des Spinzustands des Schaltmediums ändert.

7. Schalter nach einem der vorhergehenden Ansprüche, umfassend Mittel zum Anlegen eines Magnetfelds (B) an das Schaltmedium, um dafür zu sorgen, dass Ladungsträgerspins, die durch den ersten Puls induziert sind, in Richtung einer Ausrichtung mit Ladungsträgerspins präzessieren, die durch den zweiten Puls induziert sind.

8. Schalter nach Anspruch 7, umfassend Mittel zum Richten von Zügen des ersten und des zweiten Pulses (CP1a, b, c, CP2a, b, c) in das Medium, sowie Mittel zum Ändern der Stärke des angelegten Magnetfelds zur Bestimmung einer Korrelation zwischen den Pulszügen.

9. Schalter nach Anspruch 4, umfassend Mittel zum Richten von Zügen des ersten und des zweiten Pulses und Zügen der Prüfstrahlung (CP1a, b; CP2a, b; P1, P2) in das Medium, wobei der Schalter derart arbeitet, dass die Detektoreinrichtung eine Ausgabe als Funktion der relativen Phase der Pulszüge liefert.

10. Schalter nach Anspruch 9, umfassend Mittel, die auf die Ausgabe der Detektoreinrichtung ansprechen, um die Phase der Prüfpulse relativ zur Phase des ersten und des zweiten Pulses zu kontrollieren.

11. Schalter nach Anspruch 4, wobei die Detektoreinrichtung derart arbeitet, dass sie eine Ausgabe (23) als Funktion einer Zeitverzögerung zwischen dem ersten und dem zweiten der Pulse liefert.

12. Schalter nach Anspruch 11, umfassend eine Datenkodiereinrichtung (44) zum Kodieren von Daten durch Kontrollieren der Verzögerung zwischen dem ersten und dem zweiten Puls.

13. Schalter nach einem der vorhergehenden Ansprüche, wobei das Schaltmedium in einem optischen Hohlraum (37, 38) enthalten ist.

14. Schalter nach einem der vorhergehenden Ansprüche, wobei das Schaltmedium eine Quantentopfstruktur (12, 13) enthält.

15. Schalter nach Anspruch 14, wobei die Quantentopfstruktur einen ersten Topf (31) für Ladungsträger im ersten Spinzustand sowie einen zweiten Topf (34, 35) enthält, der vom ersten Topf durch eine Barriereeinrichtung getrennt ist, durch welche Ladungsträger aus dem ersten Topf tunneln können.

16. Schalter nach Anspruch 15, wobei der erste und der zweite Puls jeweils Elektron-Loch-Paare mit verschiedenen Spins anregen.

17. Schalter nach einem der Ansprüche 14 bis 16, wobei die Quantentopfstruktur eine periodische Struktur von Schichten (11, 12) aus GaAsund AlGaAs-Material enthält.

18. Schalter nach einem der vorhergehenden Ansprüche, wobei die Einrichtung zum Erzeugen der ersten und zweiten Pulse eine Strahlteilereinrichtung (27) umfasst, um aus einem einlaufenden linear polarisierten Puls erste und zweite geteilte Pulse zu bilden, die im Wesentlichen orthogonale Polarisationsrichtungen haben, eine Verzögerungseinrichtung (M1, M2) umfasst, um einen der geteilten Pulse relativ zum anderen zu verzögern, eine Strahlkombiniereinrichtung (28) umfasst, um die geteilten Pulse auf einen gemeinsamen optischen Ausgabeweg zu richten, sowie eine Zirkularpolarisiereinrichtung umfasst, um die geteilten Pulse in entgegengesetzten Rotationsrichtungen zirkular zu polarisieren.

**19.** Schalter nach Anspruch 18, wobei die Zirkularpolarisiereinrichtung (30) eine Viertelwellenplatte im gemeinsamen Ausgabeweg umfasst.

**20.** Verfahren zum Schalten eines optischen Schaltmediums, umfassend:

Richten eines ersten Pulses von optischer Strahlung mit einer ersten Polarisationscharakteristik auf das Schaltmedium, um eine erste Ladungsträger-Spinzustandsbedingung zu erzeugen, Richten eines zweiten Pulses von optischer Strahlung mit einer unterschiedlichen Polarisationscharakteristik auf das Schaltmedium vor einer Relaxation der ersten Ladungsträger-Spinzustandsbedingung, um eine zweite Ladungsträger-Spinzustandsbedingung zu erzeugen, Richten optischer Prüfstrahlung mit einer vorbestimmten Polarisationsbedingung in das Medium, und Bestimmen der Spinzustandsbedingung des Mediums durch Überwachen der Polarisationsbedingung der Prüfstrahlung.

**Revendications**

**1.** Commutateur optique comprenant :

un milieu de commutation optique (1) ;
une source d'impulsions (2) destinée à diriger une première impulsion (CP1) de rayonnement optique, avec une première caractéristique de polarisation, vers le milieu de commutation afin de produire une première situation d'état de spin des porteurs de charge ;
une source d'impulsions (2) destinée à ensuite diriger une seconde impulsion (CP2) de rayonnement optique, avec une seconde caractéristique de polarisation, vers le milieu de commutation, avant la relaxation de la première situation d'état de spin des porteurs de charge, afin de produire une seconde situation d'état de spin des porteurs de charge ; et
une source de rayonnement de sondage (4) afin de diriger un rayonnement optique de sondage dans le milieu afin de déterminer la situation d'état de spin du milieu.

**2.** Commutateur selon la revendication 1, dans lequel la première impulsion (CP1) a une polarisation qui tourne avec le temps dans une première direction et la seconde impulsion (CP2) a une polarisation qui tourne avec le temps dans une seconde direction opposée.

**3.** Commutateur selon la revendication 2, dans lequel la première et la seconde impulsions sont polarisées circulairement dans des directions opposées.

**4.** Commutateur selon l'une quelconque des revendications précédentes, comprenant un moyen détecteur (6, 7, 8 ; 19, 20, 22) répondant à une caractéristique de polarisation du rayonnement de sondage après son passage dans le milieu de commutation, afin de détecter l'état de spin du milieu.

**5.** Commutateur selon la revendication 4, dans lequel le rayonnement de sondage (P1) est pulsé.

**6.** Commutateur selon la revendication 4 ou 5, dans lequel le rayonnement de sondage (P1) a une polarisation plane et change de direction de polarisation en fonction de l'état de spin du milieu de commutation.

**7.** Commutateur selon l'une quelconque des revendications précédentes, comprenant un moyen d'appliquer un champ magnétique (B) au milieu de commutation afin d'amener les spins des porteurs de charge induits par la première impulsion (CP1) à tendre à s'aligner avec les spins des porteurs de charge induits par la seconde impulsion.

**8.** Commutateur selon la revendication 7, comprenant un moyen pour diriger des trains desdites première et seconde impulsions (CP1a, b, c, CP2a, b, c) dans le milieu et un moyen pour varier l'intensité du champ magnétique appliqué afin de déterminer la corrélation entre les trains d'impulsions.

**9.** Commutateur selon la revendication 4, comprenant un moyen pour diriger des trains desdites première et seconde impulsions et des impulsions du rayonnement de sondage (CP1a, b ; CP2a, b ; P1, P2) dans le milieu, le commutateur fonctionnant de manière à ce que le moyen détecteur fournisse une sortie qui est une fonction des phases relatives des trains d'impulsions.

**10.** Commutateur selon la revendication 9, comprenant un moyen répondant à la sortie du moyen détecteur pour commander la phase des impulsions de sondage par rapport à la phase des première et seconde impulsions.

**11.** Commutateur selon la revendication 4, dans lequel le moyen détecteur fonctionne de manière à fournir une sortie (23) en fonction d'un retard entre les première et seconde impulsions.

**12.** Commutateur selon la revendication 11, comprenant un moyen d'encodage de données (44) pour encoder des données en commandant le retard entre les première et seconde impulsions.

**13.** Commutateur selon l'une quelconque des revendications précédentes, dans lequel le milieu de commutation est inclus dans une cavité optique (37, 38).

**14.** Commutateur selon l'une quelconque des revendications précédentes, dans lequel le milieu de commutation comprend une structure à puits quantiques (12, 13).

**15.** Commutateur selon la revendication 14, dans lequel la structure à puits quantiques comprend un premier puits (31) pour des porteurs de charge dans le premier état de spin et un second puits (34, 35), séparé du premier puits par un moyen de barrière au travers duquel des porteurs de charge peuvent tunneler à partir du premier puits.

**16.** Commutateur selon la revendication 15, dans lequel les première et seconde impulsions stimulent chacune des paires électron-trou à spins différents.

**17.** Commutateur selon les revendications 14 à 16, dans lequel la structure à puits quantiques comprend une structure périodique de couches (11, 12) de GaAs et d'AlGaAs.

**18.** Commutateur selon l'une quelconque des revendications précédentes, dans lequel le moyen de production des première et seconde impulsions comprend un moyen diviseur de faisceau (27) pour former, à partir d'une impulsion d'entrée à polarisation plane, une première et une seconde impulsions dédoublées qui ont des directions de polarisation substantiellement orthogonales, des moyens de retard (M1, M2) pour retarder l'une des impulsions dédoublées par rapport à l'autre, un moyen de combinaison de faisceaux (28) pour envoyer les impulsions dédoublées vers un chemin de sortie optique commun et un moyen de polarisation circulaire pour polariser circulairement les impulsions dédoublées dans des sens de rotation opposés.

**19.** Commutateur selon la revendication 18, dans lequel le moyen de polarisation circulaire (30) comprend une lame quart d'onde dans le chemin de sortie commun.

**20.** Procédé de commutation d'un moyen de commutation optique, comprenant le fait de diriger une première impulsion de rayonnement optique, avec une première caractéristique de polarisation, vers le milieu de commutation, afin de produire une première situation d'état de spin des porteurs de charge, de diriger une seconde impulsion de rayonnement optique, avec une caractéristique de polarisation différente, vers le milieu de commutation, avant la relaxation de la première situation d'état de spin des porteurs de charge, afin de produire une seconde situation d'état de spin des porteurs de charge, d'envoyer un rayonnement optique de sondage, avec une situation prédéterminée de polarisation, dans le milieu et de déterminer la situation d'état de spin du milieu en surveillant la situation de polarisation du rayonnement de sondage.

control pulses

CONTROL PULSE SOURCE 2

CP2

T

lcp

CP1

rcp

3

semiconductor device

PBS

probe radiation source 4

probe pulse

P

5

6  P'

1

7

detector 8

10

spin state

9

FIG. 1

GaAs

AlGaAs

GaAs

13  12
12
13
11

1

Fig. 2

FIG. 3

Fig. 4a        Fig. 4b        FIG. 4

Fig. 5a        Fig. 5b        FIG. 5

FIG. 6

FIG. 7

14

CP2

T

CP1

lcp

control pulses

rcp

3

P

probe pulse

5

1

transmitted
pulse

FIG. 8

37  GaAs
quantum
well  36  38  semiconductor substrate

pump

probe

λ/2

dielectric mirrors
formed from alternating layers
of semiconductors AlGaAs
and AlAs.

FIG . 12

GaAs

35

GaAs
AlGaAs
32
GaAs
AlGaAs
31
33
GaAs
AlGaAs
34

z

GaAs

## Fig. 10

34    32    31    33    35

Energy

conduction
band

$E1$

pump    recombination

GaAs

valence
band

$E0$

AlGaAs

growth direction $z$

tunneling

FIG. 11

FIG. 9

FIG. 13

FIG. 14

FIG 15a

FIG 15B

CP1a CP1b CP1c FIG. 16A

pump light pulses

rcp

lcp

CP2a CP2b

spin

FIG 16B

P1 P2 P3

phase shift ϕ=0 ϕ=π/2 ϕ=π

probe pulses

FIG 16C

response

FIG 16D

probe pulses with different frequency

FIG 16E

response

FIG 16 F

Voltage to time delay converter

ring cavity

EO switch
and polarisation
converter

~ 48
~ 47
49

data stream in

CP2 CP1

lcp rcp

data encoded
as time separation

Transmission

50

Detection by
time-to-voltage
converter

52

CW probe beam

53

spin
switching
medium

pump

51

19

21a 21b

22

23

reconstructed
data stream

FIG. 17

$T_f$

spin
pair
coding

lcp

rcp

3        8        7

t

FIG. 18